# EUROPÄISCHE PATENTSCHRIFT

(11) **EP 1 506 649 B1**
(45) Veröffentlichungstag und Bekanntmachung des Hinweises auf die Patenterteilung: **09.01.2008**
(21) Anmeldenummer: 03740017.3
(22) Anmeldetag: 23.05.2003
(51) Int. Cl.: H04L 12/58

(54) **ABFRAGE VON EMAIL-INFORMATIONEN ÜBER TELEFON**
REQUEST FOR E-MAIL INFORMATION VIA TELEPHONE
CONSULTATION PAR TELEPHONE D'INFORMATIONS RELATIVES AU COURRIER ELECTRONIQUE

(30) Priorität: 23.05.2002 DE 10222876
(43) Veröffentlichungstag der Anmeldung: 16.02.2005
(73) Patentinhaber: NOKIA SIEMENS NETWORKS GMBH & CO. KG, 81541 München (DE)
(72) Erfinder: BAUMANN, Thomas, 83607 Holzkirchen (DE)
(86) Internationale Anmeldenummer: PCT/DE2003/001665
(87) Internationale Veröffentlichungsnummer: WO 2003/101055

(56) Entgegenhaltungen:
- EP-A- 0 869 690
- WO-A-00/59164
- WO-A-02/21790
- US-A- 6 118 856
- VAN DER MEER S, ARBANOWSKI S: "SERVICE INTEROPERABILITY THROUGH ADVANCED MEDIA GATEWAYS" TELECOMMUNICATION NETWORK INTELLIGENCE IFIP TC6/WG6.7,5TH INT.CONF. ON INTELLIGENCE IN NETWORKS (SMARTNET 2000), Seiten 583-595, XP002257741 VIENNA, AUSTRIA
- KLAPSING R ET AL: "BEI ANRUF MAIL POP- UND SMTP-ZUGRIFF PER WAP - EIN PERL-PROJEKT" PROCEEDINGS OF THE 30TH ANNUAL ACM SYMPOSIUM ON THEORY OF COMPUTING. DALLAS, TX, MAY 23 - 26, 1998, PROCEEDINGS OF THE ANNUAL ACM SYMPOSIUM ON THEORY OF COMPUTING, NEW YORK, NY: ACM, US, 23. Mai 1998 (1998-05-23), Seiten 292-294,296,298-301, XP000967152 ISBN: 0-89791-962-9

## Beschreibung

Die Erfindung betrifft ein Verfahren und eine Steuervorrichtung zum Abfragen von Email-bezogenen Informationen, die in einem Server gespeichert sind.

Durch die Konvergenz verschiedener Netztechnologien ergeben sich in der Vermittlungstechnik neue Anforderungen, beispielsweise bei dem Zusammenwirken von Internettechnologien und Telephonie.

Die Konvergenz bzw. der Zusammenschluss - der englische Ausdruck Interworking wird in diesem Zusammenhang gerne gebraucht - von Sprach- und Datennetzen eröffnet neue Möglichkeiten für Dienste und Dienstmerkmale.

Derzeit gibt es erhebliche Entwicklungstätigkeiten zur Anbindung von Telekommunikationsendgeräten an Datennetze zum Zwecke von paketorientierter Übertragung von Sprache. Die Bereitstellung vermittlungstechnischer Ressourcen zur Realisierung der aus den herkömmlichen Telekommunikationsnetzen (Time Division Multiplexing (TDM) Netze) bekannten Übertragungsqualität und Dienstmerkmalen wird durch neu entwickelte oder entsprechend angepasste Protokolle und Hardwareelementen angestrebt.

Zur Steuerung von Sprachübertragung im Paketnetz können paketorientierte Vermittlungssysteme verwendet werden. Bei diesen handelt es sich beispielsweise um klassische Vermittlungssysteme, die mit zusätzlichen Modulen für Signalisierung im Paketnetz ausgestattet wurden. In Paketnetz wird zumeist der Nutzdatenstrom nicht wie bei TDM Netzen über die Vermittlungsstelle bzw. das Vermittlungssystem geführt. Man spricht in diesem Zusammenhang auch von "Virtual Trunking". Angesichts dieser Trennung von Nutzdatenstrom und Signalisierung werden im Paketnetz häufig sogenannte Softswitche verwendet. Es handelt sich hier um eine Netzarchitektur, in der zwei getrennte Netzelemente Anwendung finden. Die Steuerungs- und Signalisierungsfunktionen klassischer Vermittlungssysteme wird von sogenannten Media Gateway Controllern übernommen. Die Nutzdaten werden z.B. für Anpassungen bei Netzübergängen über Media Gateways geleitet. Media Gateway Controller und Media Gateways kommunizieren miteinander mit Hilfe von Protokollen wie dem MGCP (Media Gateway Control Protocol) Protokoll, das zu diesem Zweck entwickelt und standardisiert (RFC 2705) wurde.

Für den Transport von Signalisierungsnachrichten über verschiedene Netze wurden Protokolle wie das SCTP (Stream Transmission Control Protocol) entwickelt, das für die Übermittlung von PSTN (Public Switched Telephone Network) Signalisierungsnachrichten über IP (Internet Protocol) Netze erlaubt.

In der WO 02 21790 A sind ein System und ein Verfahren zur effizienten Übermittlung von Email-Nachrichten zu einem Nutzer offenbart. Dabei können Anhänge separat von dem Text einer Email-Nachricht herunter geladen werden, wodurch die Bandbreitenbelastung reduziert wird. Die Anhänge werden für den Nutzer als Links referenziert und können durch Anklicken herunter geladen werden.

In der Veröffentlichung "Service Interoperability Through Advanced Media Gateways" von van Meer S. und Arbanowski S., welche erschienen ist in Telecommunication Network Intelligence IFIP TC6/WG6.7, 5th int. Conf. On Intelligence In Networks (SMARTNET 2000), Seiten 583-595, XP002257741, wird eine moderne Netzwerkarchitektur mit Mediagateways zur Nachrichtenumsetzung bei Netzgrenzen vorgestellt. Dabei ist insbesondere eine Trennung von Dienststeuerung und Nutzdatenübertragung vorgesehen.

Die Erfindung hat zur Aufgabe, einen flexibleren Zugriff auf Email-bezogene Informationen bereitzustellen.

Die Aufgabe wird durch ein Verfahren zum Abfragen von Email-bezogenen Informationen mit den Merkmalen des Anspruchs 1 und durch einen Media Gateway Controller mit Mitteln zur Ausführung der Schritte des Verfahrens gelöst.

Bei dem erfindungsgemäßen Verfahren zum Abfragen von Email-bezogenen Informationen wird von einem Telekommunikationsendgerät, das direkt oder über ein Zugangsnetz an ein Paketnetz angeschlossen ist, eine Eingabe zur Abfrage von einer Email-bezogenen Information gemacht. Durch die Eingabe wird eine Steuervorrichtung veranlasst, eine Verbindung über das Paketnetz zu dem Server, z.B. einem Mailserver, aufzubauen. Über die aufgebaute Paketnetz-Verbindung wird die abgefragte Email-bezogene Information zu der Steuervorrichtung übertragen, z.B. mit Hilfe des SMTP (Simple Mail Transfer Protocol) Protokolls oder des POP (Post Office Protocol) Protokolls, und von der Steuervorrichtung zum Telekommunikationsendgerät übermittelt. Die abgefragte Email-bezogene Information wird schließlich auf einer Anzeigeeinrichtung des Telekommunikationsendgeräts angezeigt. Bei der Email-bezogenen Information handelt es sich beispielsweise um eine Statusinformation wie die Anzahl ungelesener Emails oder den Inhalt bzw. Text von Email-Nachrichten. Bei der Steuervorrichtung kann es sich einen Media Gateway Controller handeln, z.B. wenn Virtual Trunking im Paketnetz praktiziert wird, oder auch um eine herkömmliche Vermittlungsstelle (Layer-5 Switch), die Funktionen für die Paketnetz-bezogene Signalisierung bereitstellt. Im folgenden wird der Ausdruck "paketorientierte Vermittlungsstelle" für Vorrichtungen mit Signalisierungsfunktionen für das Paketnetz verwendet, bei denen keine getrennte Übertragung von Signalisierung und Nutzdaten vorliegt.

Die Erfindung erlaubt einem Endteilnehmer, Informationen über seine Email-Box bzw. Emails auf einfache und schnelle Weise abzufragen. Man kann sich so das Hochfahren eines Internetendgeräts, zum Beispiel eines PCs, zur Abfrage der erhaltenen Email-Nachrichten ersparen. Die Lösung lässt sich auf einem Media Gateway Controller oder einem paketorientierten Vermittlungssystem auf einfache Weise implementieren. Die Erfindung kann rein auf Software-Basis realisiert werden. Der Media Gateway Controller bzw. das paketorientierte Vermittlungssystem müssen lediglich mit Mitteln zum Identifizieren von Nachrichten, die von einem Telefon zum Zwecke der Abfrage einer Email-bezogenen Information übermittelt werden, und mit Mitteln zum Aufbau einer Verbindung zur Übertragung der abgefragten Information von dem Ort bzw. Server, wo sie gespeichert ist, vorgesehen werden. Die Erfindung erhöht auch die Flexibilität hinsichtlich des Zugriffs auf Email-Informationen, zumal vielfach, beispielsweise auf Reisen, kein Internetendgerät, sondern nur ein Telefon für die Abfrage zur Verfügung steht.

Telekommunikationsendgeräte, die paketbasierten Datenverkehr nicht unterstützten, können über ein Zugangsnetz mit dem Paketnetz verbunden sein und mit der Steuervorrichtung über einen peripheren Adapter oder eine Vermittlungsstelle Nachrichten austauschen. "Peripherer Adapter" ist dabei im Sinne des englischen Ausdrucks "customer premises gateway" zu verstehen. Beispiele sind IADs (Integrated Access Devices) und MTAs (Multimedia Terminal Adapter). Das Zugangsnetz funktioniert z.B. auf der TDM (Time Division Multiplexing) Technik und verwendet die DSL (Digital Subscriber Line) Technik zwecks breitbandigem Zugriff auf Nutzdaten im Paketnetz (evtl. über ein Gateway zur Anpassung zwischen TDM Netz und Paketnetz).

Bei einem TDM basierten Zugangsnetz, das über einen peripheren Adapter auf das Paketnetz IPCore zugreift, kann ein analoges Telefon oder ein ISDN(Integrated Services Digital Network)-Telefon für die Abfrage von Email-bezogenen Informationen verwendet werden. Für den Nachrichtenaustausch zwischen einem analogen Telefon und einem peripheren Adapter im Rahmen des Verfahrens kann FSK(Frequency Key Shift)-Signalisierung angewendet werden. Bei einem ISDN-Telefon gibt es die Möglichkeit, mittels des DSS1 (Digital Signal Standard No. 1) Protokolls - man spricht in diesem Zusammenhang auch häufig von D-Kanal Signalisierung - Nachrichten und Steuerinformationen für die Email-Abfrage mit dem peripheren Adapter auszutauschen. Dieselben Protokolle können auch für den Austausch von Nachrichten bzw. Steuerinformationen zwischen Telekommunikationsendgerät und einer Vermittlungsstelle abgewendet werden.

Zur Kommunikation zwischen einem peripheren Adapter und der Steuervorrichtung kann das MGCP Protokoll bei analogen Endgeräten oder das SCTP (Stream Control Transfer protocol) Protokoll für ISDN-Endgeräte zur Anwendung kommen.
Zur Kommunikation zwischen einer Vermittlungsstelle und der Steuervorrichtung kann das ISUP (ISDN User Part) Protokoll im Rahmen von SS7 (Signalling System No.7) Signalisierung verwendet werden.
Die Erfindung hat den Vorteil, dass verschiedenste Telekommunikationsendgeräte für die Abfrage von Emails verwendete werden kann. Der Einsatz der für die Abfrage bzw. für die Übermittlung von Informationen verwendeten Technologien bzw. Protokolle lässt sich für den Dienstnutzer transparent gestalten. Unterschiedliche Typen und Anschlüsse von Telekommunikationsendgeräten können für einheitliche Dienstmerkmale und Dienststeuerung bei der Abfrage von Emails durch den Dienstnutzer konfiguriert werden. Neben herkömmlichen Telekommunikationsendgeräten, wie sie bei TDM Netzen verwendet werden, können auch Telekommunikationsendgeräte verwendet werden, die einen direkten Anschluss an das paketbasierte Netz unterstützen. Beispiele sind IP-Telefone, d.h. Telefone, die Sprachübertragung über ein IP-Netz (Voice-over-IP) erlauben, oder PDAs (Personal Digital Assistants), die über eine wireless LAN (Local Area Network) Schnittstelle mit dem Paketnetz verbunden sind. Als Protokoll für die Kommunikation mit der Steuervorrichtung kann dann z.B. das MGCP Protokoll Verwendung finden.

Die Abfrage kann auch von einem Mobiltelefon aus initiiert werden, und zwar über eine Vermittlungsstelle, die Telephonie mit Mobiltelefonen unterstützt. Diese Vermittlungsstelle kommuniziert mit der Steuervorrichtung z.B. mittels SS7 Protokollen. Zwischen dem Telekommunikationsendgerät und der Vermittlungsstelle, die Telephonie mit Mobiltelefonen unterstützt, kann das BSSAP (Base Station Application Part) Protokoll zur Anwendung kommen.

Im folgenden wird der Erfindungsgegenstand im Rahmen eines Ausführungsbeispiels anhand von Figuren näher erläutert. Es zeigen:
Fig.1: System für erfindungsgemäße Email-Abfrage mit Hilfe eines über einen peripheren Adapter an ein paketorientiertes Netz angeschlossenen analogen Telefons,
Fig.2: System für erfindungsgemäße Email-Abfrage mit Hilfe eines über einen peripheren Adapter an ein paketorientiertes Netz angeschlossenen ISDN-Telefons,
Fig.3: System für erfindungsgemäße Email-Abfrage mit Hilfe eines IP-Telefons,
Fig.4: System für erfindungsgemäße Email-Abfrage mit Hilfe eines über eine TDM Vermittlungsstelle an ein paketorientiertes Netz angeschlossenen analogen Telefons,
Fig.5: System für erfindungsgemäße Email-Abfrage mit Hilfe eines über eine TDM Vermittlungsstelle an ein paketorientiertes Netz angeschlossenen ISDN-Telefons,
Fig.6: System für erfindungsgemäße Email-Abfrage mit Hilfe eines über eine TDM Vermittlungsstelle und ein Media Gateway an ein paketorientiertes Netz angeschlossenen analogen Telefons,
Fig.7: System für erfindungsgemäße Email-Abfrage mit Hilfe eines über eine TDM Vermittlungsstelle und ein Mediagateway an ein paketorientiertes Netz angeschlossenen ISDN-Telefons,
Fig.8: System für erfindungsgemäße E-mail-Abfrage mit Hilfe eines Mobiltelefons.

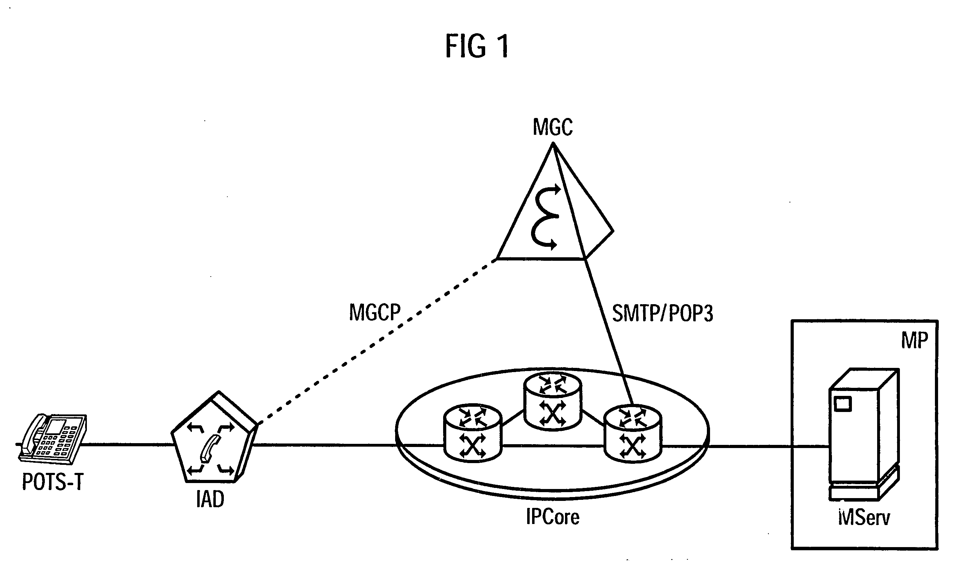

Dabei bezeichnen gleiche Bezugszeichen gleiche Elemente. Figuren 1 bis 8 stellen verschiedene Konstellationen dar, in denen die Erfindung zur Anwendung kommen kann. Im folgenden wird anhand von Figur 1 ein erfindungsgemäßes Verfahren für die Abfrage von Statusinformationen eines Email-Accounts bei einem Dienstanbieter SP (häufig mit dem engl. Ausdruck Service Provider bezeichnet) und Inhalten bzw. Texten empfangener Email-Nachrichten dargestellt. Für die weiteren Konstellationen 2 bis 8 werden Änderungen bzw. Abweichungen bei dem erfindungsgemäßen Verfahren von Figur 1 für die jeweilige Konstellation beschrieben.

In Figur 1 ist ein System für eine erfindungsgemäße Abfrage von einer Email-bezogenen Information mit Hilfe eines analogen Telefons ISDN-T gezeigt. Das analoge Telefon ISDN-T ist über ein Zugangsnetz, das beispielsweise mit Hilfe der Voice-over-DSL-Technik betrieben wird, über ein IAD (integrated access device) mit einem paketbasierten Netz IPCore verbunden. Bei dem paketbasierten Netz handelt es sich beispielsweise um ein IP-Netz (IP: Internet Protocol) oder ein ATM-Netz (ATM: asynchroneous transfer mode). Das IAD kann mit Hilfe des MGCP-Protokolls MGCP Signalisierungsnachrichten mit einem Media Gateway Controller MGC austauschen. Der Media Gateway Controller MGC greift erfindungsgemäß auf einen Mail-Server Mserv zu, wobei beispielsweise das SMTP (Simple Mail Transfer Protocol)-Protokoll entsprechend Standard IETF RFC821 oder das POP3 (Post Office Protocol Version 3)-Protokoll entsprechend Standard IETF RFC1939 verwendet wird.

Eine erfindungsgemäße Abfrage einer Email-Statusinformation und dem Inhalt von empfangenen E-Mail-Nachrichten läuft dann auf folgende Weise ab: Der Endteilnehmer nimmt den Hörer des analogen Telefons POTS-T ab und wählt einen speziellen Code zur Abfrage von Emails, zum Beispiel "*4711". Auf Grund dieser Eingabe wird über das Zugangsnetz und das IAD eine Signalisierungsinformation an den Media-Gateway-Controller übertragen, wodurch sich eine Abfrage des Email-Status mit Hilfe des SMTP-Protokolls oder des POP3-Protokolls veranlasst wird. Der Media Gateway Controller MGC übermittelt die abgefragte EMail-Statusinformation, beispielsweise die Anzahl der ungelesenen Emails als ASCII Text, mittels des MGCP-Protokolls zum IAD. Es kann z.B. für die Übermittlung des Texts der Steuerbefehl "RequestNotification" verwendet werden. Dieser Steuerbefehl ist in dem IETF RFC2705, der das MGCP-Protokoll beschreibt, spezifiziert. Mittels RequestNotification kann eine "Line Package" übermittelt werden. Packages dienen laut IETF RFC2705 zur Übermittlung von "Events" und "Actions", d.h. Auslösung und Steuerung von Ereignissen. Das Line Package enthält einen Parameter adsi (Analog Display Service Interface), der einen String als Wert aufnehmen kann. Dieser String beinhaltet erfindungsgemäß eine EMail-Statusinformation oder Text aus einer Email-Nachricht. Das IAD schickt nach Erhalt der Email-Statusinformation diese mittels FSK (Frequency Shift Key) Signalisierung, die in dem Standard ETSI-ETS300659 definiert ist, zum analogen Telefon ISDN-T. Auf Erhalt der Statusinformation, dass heißt z.B. der Anzahl der ungelesenen Emails, kann der Endteilnehmer noch einmal die Taste "*" drücken, worauf ihm der Titel und der Absender der aktuellsten ungelesenen Mail als ASCII Text angezeigt wird. Der Transport dieser Information erfolgt wie bei der Abfrage der Email-Statusinformation, d.h. mittels des MGCP-Protokolls bzw. FSK Signalisierung. Beim erneuten Drücken der Taste "*'' wird dem Endteilnehmer der Titel und der Absender der nächsten ungelesenen Email in Textform angezeigt. Gibt es keine weiteren ungelesenen Emails mehr, werden Titel und Absender der bereits gelesenen Emails angezeigt. Vor dem Titel und dem Absender der jeweiligen Email wird eine Nummer ausgegeben, damit der Endteilnehmer diese Email bei späteren Angaben referenzieren kann. Ist beim nächsten Drücken der Taste "*" keine weitere Email mehr vorhanden, wird der Text "keine weitere Email" angezeigt. Drückt daraufhin der Endteilnehmer eine Ziffernfolge gefolgt von der Taste "*", zum Beispiel "1*", wobei die Ziffernfolge die gewünschte Email referenziert, wird ihm der Text der entsprechenden E-mail angezeigt. Da die Anzeige des analogen Telefons im Allgemeinen nicht den gesamten Text anzeigen kann, wird diese im Telefon als Laufschrift anzeigt. Alternativ schickt der Media Gateway Controller MGC immer nur die Anzahl von Zeichen, die in der Anzeige angezeigt werden können und der Endteilnehmer drückt die Taste "*" wiederholt, um weitere Zeichen anzufordern. Drückt der Endteilnehmer die Taste "#", wird die Anzeige der jeweiligen Email abgebrochen und der Endteilnehmer kann die nächste Email anfordern. Die Email-Abfrage wird beendet indem der Endteilnehmer den Hörer auflegt. Dabei erfolgt der Transport von statischen Informationen oder Emails in ASCI-Format immer mit Hilfe einer entsprechenden Anfrage an den Media Gateway Controller über das IAD mit Hilfe des MGCP Protokolls. Der Media Gateway Controller fragt dann mit Hilfe eines geeigneten Protokolls wie SMTP oder POP3 die gewünschte Information beim Server Mserv ab und überträgt sie zum analogen Telefon PSTN-T zurück.

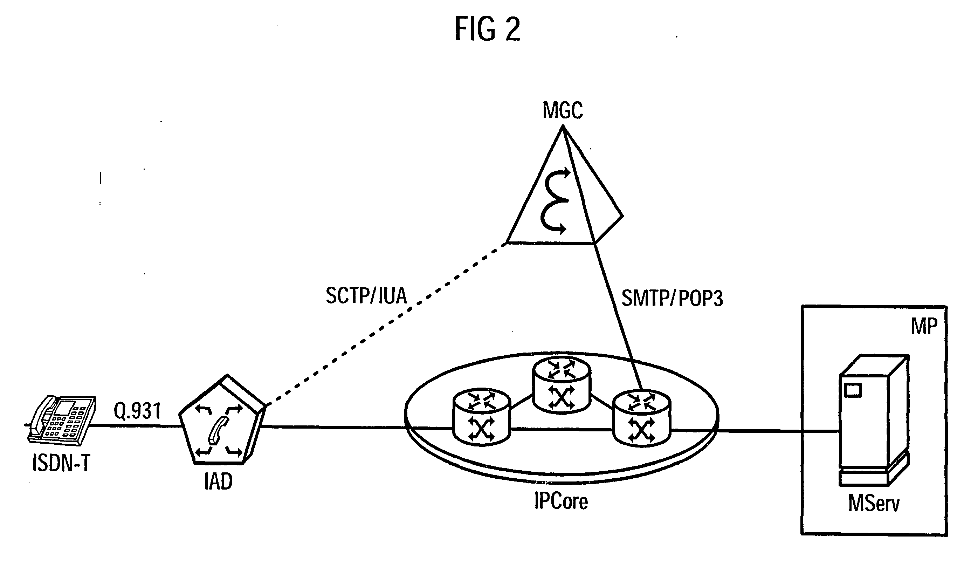

In Figur 2 ist das erfindungsgemäße System für eine Abfrage über ein ISDN-Telefon ISDN-T gezeigt. Die Abfrage unterscheidet sich zu dem Fall mit einem analogen Telefon POTS-T um folgende, sich auf das Transportprotokoll beziehende Details. Zwischen dem Endgerät (ISDN-Telefon ISDN-T) und IAD werden Email-Informationen bzw. Email-Statusinformationen im Rahmen von D-Kanalsignalisierung transportiert. Dazu wird die im ITU Standard Q.931 (ISDN User-network interface layer 3 specification for basic call) definierte "Progress"-Nachricht verwendet. Für diese Nachricht ist nach dem ITU Standard Q.957.1 (User-to-User Signalling) ein im ITU Standard Q.931 definiertes Informationselement User-to-User vorgesehen, das den Transport von Strings erlaubt. Zwischen IAD und Media-Gateway-Controller MGC kommt das Stream Control Transmission Protocol (SCTP) zum Einsatz, das in der IETF RFC 2960 definiert ist. Dieses Protokoll arbeitet mit dem ISDN-User-Adaption Layer (IUA), der in dem Standard IETF RFC 3057 definiert ist, um ISDN Signalisierungsnachrichten zu übertragen.

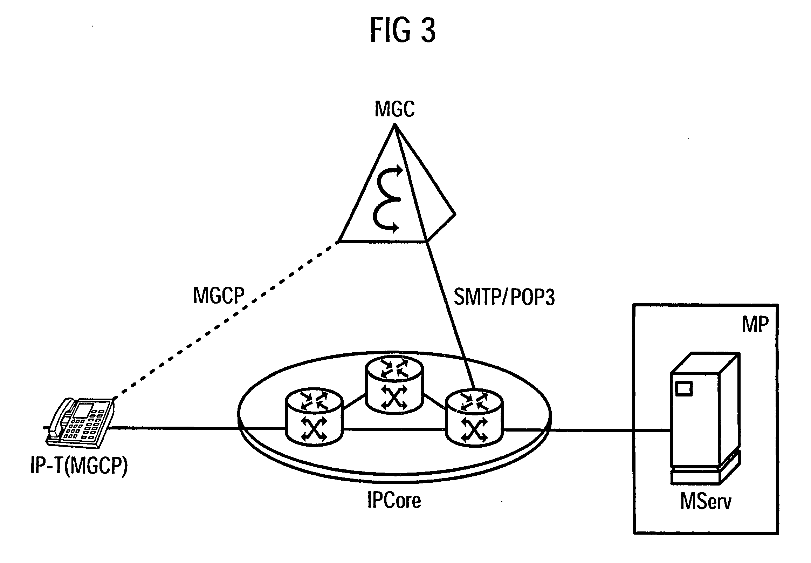

In Figur 3 ist ein IP-Telefon IP-T(MGCP) gezeigt, dass das MGCP-Protokoll unterstützt. Dieses Telefon IP-T(MGCP) ist direkt an das Paketnetz bzw. Paket basierte Weitverkehrsnetz IPCore angeschlossen. Anstatt eines IP-Telefons kann auch ein Personal Digital Assistent (PDA) zum Einsatz kommen, der über eine mobile LAN-Schnittstelle mit dem IP-Netz bzw. Paketnetz IPCore verbunden ist und der das im MGCP Protokoll unterstützt. Auf dem großen Display dieses PDA kann der Mail-Text einfach und komfortabel angezeigt werden.

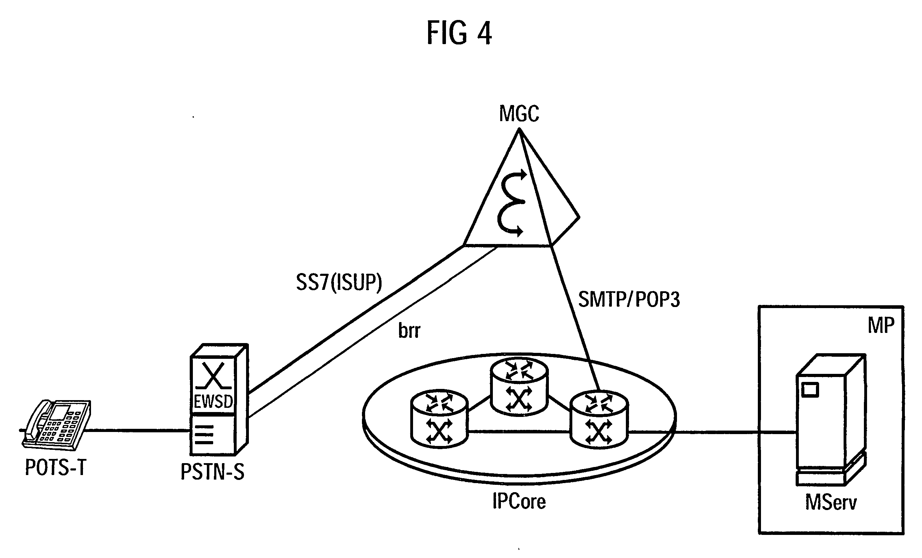

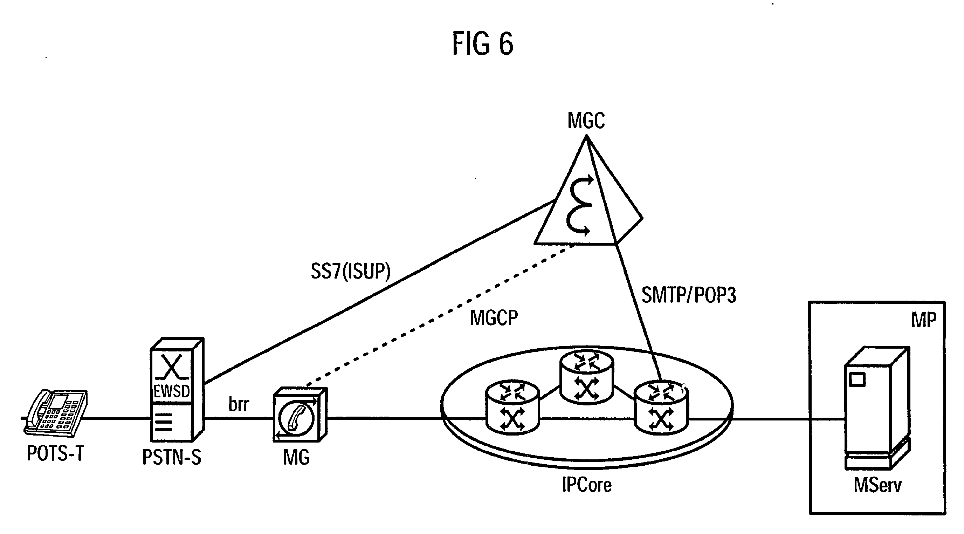

In Figuren 4 und 6 ist ein analoges Telefon POTS-T gezeigt, über das Email-Nachrichten abgefragt werden können. Dabei ist das analoge Telefon POTS-T über eine Vermittlungsstelle des TDM Netzes PSTN-S (PSTS-S: für PSTN Switch), z.B. eine Nebenstellenanlage oder ein Vermittlungssystem, angeschlossen. Der Transport von Email-Statusinformationen bzw. dem Inhalt von Email-Nachrichten vom Media Gateway Controller MGC zu der Vermittlungsstelle PSTN-S erfolgt mittels SS7 (Signalling System Nr. 7) Signalisierung. Beispielsweise kann dazu das der user-to-user information Parameter der user-to-user information message (USR) verwendet werden. Die entsprechenden Definition und funktionalen Zusammenhänge sind in den ITU Standards Q.762 (ISDN user part general functions of messages and signals), Q.763 (ISDN user part formats and codes) und Q.737.1 (User-to-user signalling) niedergelegt. Die Vermittlungsstelle PSTN-S transportiert die Email-bezogenen Informationen dann via FSK-Signalisierung zum Endgerät POTS-T. Von dem Teilnehmer eingegebene Steuersignale, z.B. "*" oder "#", werden je nach Übertragung der Nutzdaten brr (brr: steht für Bearer) unterschiedlich detektiert.
- Bei Übertragung der Nutzdaten über ein PSTN-Netz zum Media-Gateway-Controller MGC (Figur 4), kann die Intelligent Network (IN) Funktion "User interactive dialogue" verwendet werden. Details sind in dem ITU Standard Q.1601 (Signalling system No. 7 - Interaction between N-ISDN and INAP CS2) angegeben. Die Eingaben können dann zum Media-Gateway-Controller MGC übertragen und dort mittels einer sogenannten specialized ressource function (SRF), die für Intelligente Netze entsprechend dem ITU Standard Q.1224 (Distributed functional plan for intelligent network capabilities set 2) vorgesehen sein kann, detektiert werden.
- Häufig werden die Nutzdaten bzw. der Bearer brr getrennt von der Signalisierung über das Paketnetz IPCore übertragen. Man spricht in diesem Zusammenhang auch von Virtual Trunking. Die Nutzdaten werden dann im Zuge des Übergangs zwischen dem PSTN Netz und dem Paketnetz IPCore in einem Media Gateway MG angepasst. Die Eingaben können dann im Media Gateway MG detektiert bzw. erkannt und mittels des MGCP Protokolls dem Media Gateway Controller MGC gemeldet werden.

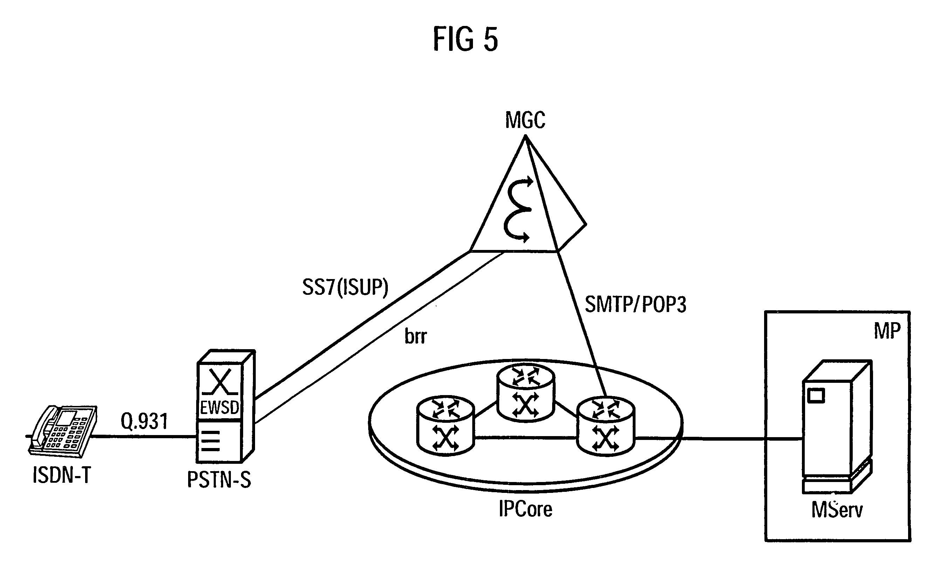

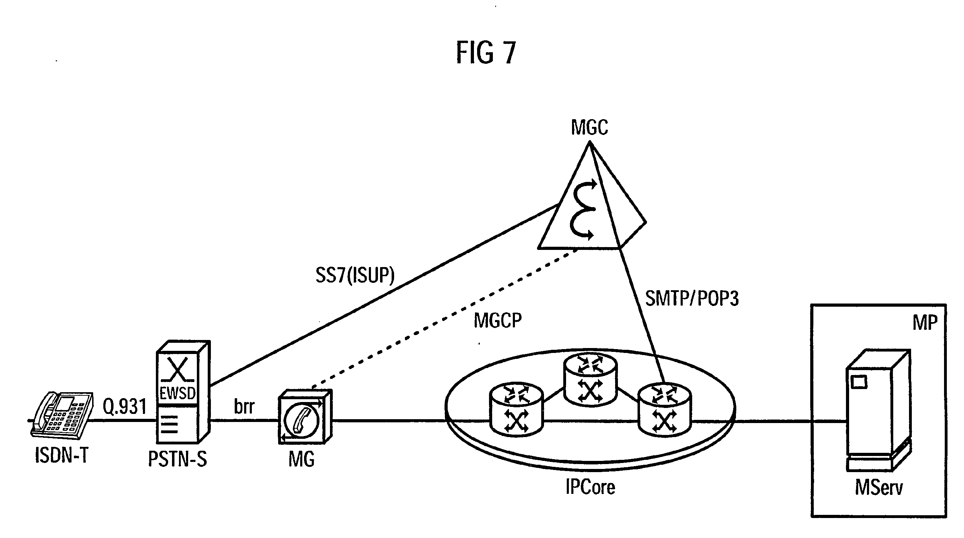

Die den Konstellationen von Figur 4 und 6 entsprechenden Konstellationen für ein ISDN-Telefon ISDN-T sind in den Figuren 5 und 7 gezeigt. Oben für die Figure 4 und 6 über die Führung der Nutzdaten und Erkennung von Teilnehmereingaben Gesagtes gilt ebenso für diesen Fall. Analog kann auch die Übermittlung Email-bezogener Informationen vom Media Gateway Controller MGC zur Vermittlungsstelle PSTN-S mittels der ISDN User Part (ISUP) Nachricht "user-to-user information message vorgenommen werden. Ein Unterschied zum analogen Telefon besteht bei dem Transport der Email-bezogenen Nachrichten zum Endgerät ISDN-T. Dieser wird analog wie bei Figur 2 über den D-Kanal z.B. mit Hilfe des User-to-user Informationselements einer "PROGRESS" Nachricht realisiert.

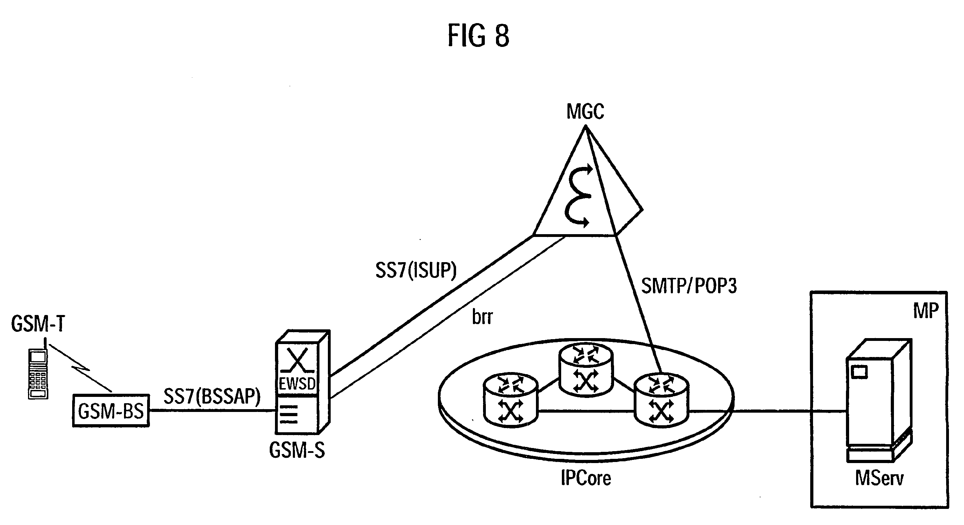

In Figur 8 zeigt die Abfrage von Email-Statusinformationen bzw. dem Inhalt von Emailnachrichten mit einem Mobiltelefon GSM-T, beispielsweise einem GSM (Global System for Mobile Communications) Mobiltelefon. Mit Hilfe des mobilen Endgeräts GSM-T werden Nachrichten an eine Basisstation GSM-BS (GSM-BS: für GSM base station) übermittelt. Über SS7 Signalisierung können mittels des in dem GSM Standard definierten Base Station User Part (BSSAP) Signalisierungsnachrichten zu einer Vermittlungsstelle GSM-S übertragen werden. Die Übertragung von Nachrichten bzw. die Signalisierung zwischen der Vermittlungsstelle GSM-S erfolgt wie in Figuren 4 und 5 mit SS7 Signalisierung. Alternativ könnte der Bearer auch über ein Media Gateway separat von der Signalisierung geführt werden, wie es in Figuren 6 und 7 für Festnetztelefone dargestellt ist (nicht als Figur für das Mobiltelefon dargestellt). Dann könnte der Austausch von Informationen zwischen Vermittlungsstelle GSM-S und Media Gateway Controller MGC bzw. Media Gateway sowie Media Gateway Controller MGC und Media Gateway entsprechend der für die Figuren 6 und 7 angegebenen Funktionen und Protokolle durchgeführt werden. In beiden Fällen können von der Vermittlungsstelle GSM-S Email-Nachrichten oder Email-Statusinformation als SMS (Short Message Service) Nachrichten zum mobilen Endgerät GSM-T transportiert werden.

Die Eingaben des Teilnehmers am Mobiltelefon GSM-T zur Steuerung der Email-Abfrage können z.B. mittels des GSM Feature "Subscriber Controlled Input (SCI)" erfolgen. Diese Eingaben werden dann z.B. mit Hilfe des BSSAP zur Vermittlungsstelle GSM-S und von dort mittels ISUP zum Media-Gateway-Controller MGC übertragen.

## Patentansprüche

1. Verfahren zum Abfragen von Email-bezogenen Informationen, die in einem Server (Mserv) gespeichert sind, bei dem
- mittels einer Eingabe an einem Telefon (POTS-T, ISDN-T, IP-T(MGCP), GSM-T), das über ein Zugangsnetz an ein Paketnetz (IPCore) angeschlossen ist und mit einem Media Gateway Controller (MGC) über einen peripheren Adapter (IAD) oder eine Vermittlungsstelle (PSTN-S, GSM-S) Nachrichten austauscht, eine Abfrage einer Email-bezogenen Information ausgelöst wird,
- durch die Eingabe ein Media Gateway Controller (MGC) veranlasst wird, eine Verbindung über das Paketnetz (IPCore) zu dem Server (Mserv) aufzubauen,
- über die aufgebaute Paketnetz-Verbindung die abgefragte E-mail-bezogenen Information zu dem Media Gateway Controller (MGC) übertragen wird,
- von dem Media Gateway Controller (MGC) die abgefragte E-mail-bezogene Information mittels ersten Signalisierungsprotokolls zu dem peripheren Adapter (IAD) bzw. zu der Vermittlungsstelle (PSTN-S, GSM-S) übermittelt wird, wobei das Protokoll durch das MGCP-Protokoll, ein SS7 Signalisierungsprotokoll oder das SCTP Protokoll gegeben ist,
- die Email-bezogene Information durch den peripheren Adapter (IAD) bzw. die Vermittlungsstelle (PSTN-S, GSM-S) für die Weiterübertragung mittels eines zweiten Signalisierungsprotokolls umgewandelt wird, wobei das zweite Signalisierungsprotokoll durch das FSK-Protokoll, das Q.931 oder das BSSAP Protokoll gegeben ist,
- die Email-bezogene Information mittels des zweiten Signalisierungsprotokolls zum Telefon (POTS-T, ISDN-T, IP-T(MGCP), GSM-T) übertragen wird, und
- die abgefragte Email-bezogene Information auf einer Anzeige des Telefons (POTS-T, ISDN-T, IP-T(MGCP), GSM-T) angezeigt wird.

2. Verfahren nach Anspruch 1,
**dadurch gekennzeichnet,**
**dass** als Telefon (POTS-T, ISDN-T, IP-T(MGCP), GSM-T) ein analoges Telefon (POTS-T), ein ISDN-Telefon (ISDN-T), ein IP-Telefon (IP-T(MGCP)), ein PDA oder ein Mobiltelefon (GSM-T) zur Anwendung kommt.

3. Verfahren nach Anspruch 1 oder 2,
**dadurch gekennzeichnet,**
**dass** die Email-bezogene Information durch eine Email-Statusinformation oder den Inhalt einer Email-Nachricht gegeben ist.

4. Verfahren nach einem der vorhergehenden Ansprüche,
**dadurch gekennzeichnet,**
- **dass** von dem Server (Mserv) Email-bezogenen Informationen mit Hilfe des SMTP oder POP Protokolls zu dem Media Gateway Controller (MGC) übertragen werden.

5. Verfahren nach einem der vorhergehenden Ansprüche,
**dadurch gekennzeichnet,**
- **dass** das Telefon (POTS-T, ISDN-T, IP-T(MGCP), GSM-T) über ein Zugangsnetz auf das Paketnetz IPCore zugreift, und
- **dass** das Telefon (POTS-T, ISDN-T, IP-T(MGCP), GSM-T) mit dem Media Gateway Controller (MGC) über einen peripheren Adapter (IAD) oder eine Vermittlungsstelle (PSTN-S, GSM-S) Nachrichten austauscht.

6. Verfahren nach Anspruch 5,
**dadurch gekennzeichnet,**
- **dass** das Telefon (POTS-T, ISDN-T, IP-T(MGCP), GSM-T) über ein TDM basiertes Zugangsnetz auf das Paketnetz (IPCore) zugreift, und
- **dass**
-- entweder
--- ein analoges Telefon (POTS-T) als Telefon (POTS-T, ISDN-T, IP-T(MGCP), GSM-T) zur Anwendung kommt, und
--- zwischen dem Telefon (POTS-T, ISDN-T, IP-T(MGCP), GSM-T) und dem peripheren Adapter (IAD) bzw. der Vermittlungsstelle (PSTN-S, GSM-S) FSK-Signalisierung angewendet wird,
-- oder
--- ein ISDN-Telefon (ISDN-T) als Telefon (POTS-T, ISDN-T, IP-T(MGCP), GSM-T) zur Anwendung kommt, und
--- zwischen dem Telefon (POTS-T, ISDN-T, IP-T(MGCP), GSM-T) und dem peripheren Adapter (IAD) das DSS1 Protokoll angewendet wird.

7. Verfahren nach Anspruch 5 oder 6,
**dadurch gekennzeichnet,**
**dass** zwischen dem peripheren Adapter (IAD) und dem Media Gateway Controller (MGC) das SCTP Protokoll zur Anwendung kommt,

8. Verfahren nach Anspruch 7,
**dadurch gekennzeichnet,**
**dass** das SCTP Protokoll mittels der "ISDN User Adaption" (IUA) DSS1 Nachrichten vom Telefon (POTS-T, ISDN-T, IP-T(MGCP), GSM-T) über das Paketnetz (IPNET) zur Steuereinrichtung (MGC) transportiert.

9. Verfahren nach Anspruch 5 oder 6,
**dadurch gekennzeichnet,**
**dass** zwischen der Vermittlungsstelle (PSTN-S, GSM-S) und dem Media Gateway Controller (MGC) das ISUP Protokoll zur Anwendung kommt.

10. Verfahren nach einem der Ansprüche 1 bis 4,
**dadurch gekennzeichnet,**
- **dass** als Telefon (POTS-T, ISDN-T, IP-T(MGCP), GSM-T) ein IP-Telefon (IP-T(MGCP)) oder ein PDA eingesetzt wird,
- **dass** das Telefon (POTS-T, ISDN-T, IP-T(MGCP), GSM-T) über eine direkte Verbindung über das Paketnetz (IPCore) mit dem Media Gateway Controller (MGC) kommuniziert, und
- **dass** für die Kommunikation zwischen Telefon (POTS-T, ISDN-T, IP-T(MGCP), GSM-T) und Media Gateway Controller (MGC) das MGCP Protokoll verwendet wird.

11. Verfahren nach einer der vorhergehenden Ansprüche,
**dadurch gekennzeichnet,**
- **dass** als Telefon (POTS-T, ISDN-T, IP-T(MGCP), GSM-T) ein Mobiltelefon (GSM-T) zum Einsatz kommt,
- **dass** das Mobiltelefon (GSM-T) über eine Vermittlungsstelle (GSM-S), die Telephonie mit Mobiltelefonen unterstützt, mit dem Media Gateway Controller (MGC) kommuniziert, und
- **dass** zwischen dem Telefon (POTS-T, ISDN-T, IP-T(MGCP), GSM-T) und der Vermittlungsstelle (GSM-S), die Telephonie mit Mobiltelefonen unterstützt, das BSSAP Protokoll verwendet wird.

12. Media Gateway Controller (MGC) mit Mitteln zur Ausführung der Schritte eines Verfahren nach einem der Ansprüche 1 bis 11.

## Claims

1. Method for requesting email-related information stored in a server (Mserv), in which
- a request for email-related information is initiated by an input at a telephone (POTS-T, IDSN-T, IP-T(MGCP), GSM-T), which is linked via an access network to a packet network (IPCore) and exchanges messages with a media gateway controller (MGC) by way of a peripheral adapter (IAD) or a switching centre (PSTN-S, GSM-S),
- a media gateway controller (MGC) is prompted by the input to establish a connection to the server (Mserv) via the packet network (IPCore)
- the requested email-related information is transmitted to the media gateway controller (MGC) via the established packet network connection,
- the requested email-related information is transmitted by the media gateway controller (MGC) to the peripheral adapter (IAD) and/or the switching centre (PSTN-S, GSM-S) by means of a first signalling protocol, with the protocol being issued by the MGCP protocol, an SS7 signalling protocol or the SCTP protocol,
- the email-related information is converted by the peripheral adapter (IAD) and/or the switching centre (PSTN-S, GSN-S) for further transmission by means of a second signalling protocol, with the second signalling protocol being issued by the FSK protocol, the Q.931 or the BSSAP protocol,
- the e-mail-related information is transmitted to the telephone (POTS-T, ISDN-T, IP-T (MGCP), GSM-T) by means of the second signalling protocol,
- the requested email-related information is displayed on a display unit of the telephone (POTS-T, IDSN-T, IP-T(MGCP), GSM-T).

2. Method according to claim 1,
**characterised in that** an analogue telephone (POTS-T), an ISDN telephone (IDSN-T), an IP telephone (IP-T(MGCP)), a PDA or a mobile telephone (GSM-T) is used as the telephone (POTS-T, IDSN-T, IP-T(MGCP), GSM-T).

3. Method according to claim 1 or 2,
**characterised in that** the email-related information is in the form of email status information or the content of an email message.

4. Method according to one of the preceding claims,
**characterised in that**
- email-related information is transmitted from the server (Mserv) to the media gateway controller (MGC) using the SMTP or POP protocol.

5. Method according to one of the preceding claims,
**characterised in that**
- the telephone (POTS-T, IDSN-T, IP-T(MGCP), GSM-T) accesses the packet network IPCore via an access network and
- the telephone (POTS-T, IDSN-T, IP-T(MGCP), GSM-T) exchanges messages with the media gateway controller (MGC) via a peripheral adapter (IAD) or a switching centre (PSTN-S, GSM-S).

6. Method according to claim 5,
**characterised in that**
- the telephone (POTS-T, IDSN-T, IP-T(MGCP), GSM-T) accesses the packet network (IPCore) via a TDM-based access network and
- that
-- either
--- an analogue telephone (POTS-T) is used as the telephone (POTS-T, IDSN-T, IP-T(MGCP), GSM-T) and
--- FSK signalling is used between the telephone (POTS-T, IDSN-T, IP-T(MGCP), GSM-T) and the peripheral adapter (IAD) or the switching centre (PSTN-S, GSM-S),
-- or
-- - an ISDN telephone (ISDN-T) is used as the telephone (POTS-T, IDSN-T, IP-T(MGCP), GSM-T) and
-- - the DSS1 protocol is used between the telephone (POTS-T, IDSN-T, IP-T(MGCP), GSM-T) and the peripheral adapter (IAD).

7. Method according to claim 5 or 6,
**characterised in that** the SCTP protocol is used between the peripheral adapter (IAD) and the media gateway controller (MGC).

8. Method according to claim 7,
**characterised in that** the SCTP protocol transports DSS1 messages using ISDN User Adaption (IUA) from the telephone (POTS-T, IDSN-T, IP-T(MGCP), GSM-T) via the packet network (IPNET) to the control device (MGC).

9. Method according to claim 5 or 6,
**characterised in that** the ISUP protocol is used between the switching centre (PSTN-S, GSM-S) and the media gateway controller (MGC).

10. Method according to one of claims 1 to 4,
**characterised in that**
- an IP telephone (IP-T(MGCP)) or a PDA is used as the telephone (POTS-T, IDSN-T, IP-T(MGCP), GSM-T),
- the telephone (POTS-T, IDSN-T, IP-T(MGCP), GSM-T) communicates with the media gateway controller (MGC) by means of a direct connection via the packet network (IPCore),
and
- the MGCP protocol is used for communication between the telephone (POTS-T, IDSN-T, IP-T(MGCP), GSM-T) and the media gateway controller (MGC).

11. Method according to one of the preceding claims,
**characterised in that**
- a mobile telephone (GSM-T) is used as the telephone (POTS-T, IDSN-T, IP-T(MGCP), GSM-T),
- the mobile telephone (GSM-T) communicates with the media gateway controller (MGC) via a switching centre (GSM-S), which supports telephony with mobile telephones, and
- the BSSAP protocol is used between the telephone (POTS-T, IDSN-T, IP-T(MGCP), GSM-T) and the switching centre (GSM-S), which supports telephony with mobile telephones.

12. Media gateway controller (MGC) with means for executing the steps of a method according to one of claims 1 to 11.

## Revendications

1. Procédé pour consulter des informations relatives au courrier électronique, qui sont stockées dans un serveur (Mserv), dans lequel
- une consultation d'information relative au courrier électronique est déclenchée au moyen d'une entrée sur un téléphone (POTS-T, ISDN-T, IP-T(MGCP), GSM-T), lequel est connecté via un réseau d'accès à un réseau de paquets (IPCore) et échange des messages avec un contrôleur de passerelle média (MGC) via un adaptateur périphérique (IAD) ou un centre de commutation (PSTN-S, GSM-S),
- un contrôleur de passerelle média (MGC) est invité, par ladite entrée, à établir une connexion vers le serveur (Mserv) via le réseau de paquets (IPCore),
- l'information consultée relative au courrier électronique est transmise vers le contrôleur de passerelle média (MGC) via la connexion établie avec le réseau de paquets,
- l'information consultée relative au courrier électronique est transférée du contrôleur de passerelle média (MGC) vers l'adaptateur périphérique (IAD) resp. le centre de commutation (PSTN-S, GSM-S) au moyen d'un premier protocole de signalisation, ledit protocole étant donné par le protocole MGCP, un protocole de signalisation SS7 ou le protocole SCTP,
- l'information relative au courrier électronique est convertie par l'adaptateur périphérique (IAD) resp. le centre de commutation (PSTN-S, GSM-S) pour la retransmission au moyen d'un deuxième protocole de signalisation, ledit deuxième protocole de signalisation étant donné par le protocole FSK, le protocole Q.931 ou le protocole BSSAP,
- l'information relative au courrier électronique est transmise au moyen du deuxième protocole de signalisation vers le téléphone (POTS-T, ISDN-T, IP-T(MGCP), GSM-T), et
- l'information consultée relative au courrier électronique est affichée sur un afficheur du téléphone (POTS-T, ISDN-T, IP-T(MGCP), GSM-T).

2. Procédé selon la revendication 1,
**caractérisé en ce que**
l'on utilise comme téléphone (POTS-T, ISDN-T, IP-T(MGCP), GSM-T) un téléphone analogique (POTS-T), un téléphone ISDN (ISDN-T), un téléphone IP (IP-T(MGCP)), un PDA ou un téléphone mobile (GSM-T).

3. Procédé selon la revendication 1 ou 2,
**caractérisé en ce que**
l'information relative au courrier électronique est donnée par une information de l'état du courrier électronique ou le contenu d'un message électronique.

4. Procédé selon l'une des revendications précédentes,
**caractérisé en ce que**
des informations relatives au courrier électronique sont transmises du serveur (Mserv) vers le contrôleur de passerelle média (MGC) à l'aide du protocole SMTP ou POP.

5. Procédé selon l'une des revendications précédentes,
**caractérisé en ce que**
- le téléphone (POTS-T, ISDN-T, IP-T(MGCP), GSM-T) accède au réseau de paquets (IPCore) via un réseau d'accès, et **en ce que**
- le téléphone (POTS-T, ISDN-T, IP-T(MGCP), GSM-T) échange des messages avec le contrôleur de passerelle média (MGC) via un adaptateur périphérique (IAD) ou un centre de commutation (PSTN-S, GSM-S).

6. Procédé selon la revendication 5,
**caractérisé en ce que**
- le téléphone (POTS-T, ISDN-T, IP-T(MGCP), GSM-T) accède au réseau de paquets (IPCore) via un réseau d'accès basé TDM, et **en ce que**
- l'on utilise
-- soit
--- un téléphone analogique (POTS-T) comme téléphone (POTS-T, ISDN-T, IP-T(MGCP), GSM-T) et
--- entre le téléphone (POTS-T, ISDN-T, IP-T(MGCP), GSM-T) et l'adaptateur périphérique (IAD) resp. le centre de commutation (PSTN-S, GSM-S) la signalisation FSK,
-- soit
--- un téléphone ISDN (ISDN-T) comme téléphone (POTS-T, ISDN-T, IP-T(MGCP), GSM-T) et
--- entre le téléphone (POTS-T, ISDN-T, IP-T(MGCP), GSM-T) et l'adaptateur périphérique (IAD) le protocole DSS1.

7. Procédé selon la revendication 5 ou 6,
**caractérisé en ce que**
l'on utilise entre l'adaptateur périphérique (IAD) et le contrôleur de passerelle média (MGC) le protocole SCTP.

8. Procédé selon la revendication 7,
**caractérisé en ce que**
le protocole SCTP transporte au moyen de la "ISDN User Adaption" (IUA) des messages DSS1 du téléphone (POTS-T, ISDN-T, IP-T(MGCP), GSM-T) via le réseau de paquets (IPNET) au dispositif de commande (MGC).

9. Procédé selon la revendication 5 ou 6,
**caractérisé en ce que**
l'on utilise entre le centre de commutation (PSTN-S, GSM-S) et le contrôleur de passerelle média (MGC) le protocole ISUP.

10. Procédé selon l'une des revendications 1 à 4,
**caractérisé en ce que**
- l'on utilise comme téléphone (POTS-T, ISDN-T, IP-T(MGCP), GSM-T) un téléphone IP (IP-T(MGCP)) ou un PDA,
- **en ce que** le téléphone (POTS-T, ISDN-T, IP-T(MGCP), GSM-T) communique avec le contrôleur de passerelle média (MGC) par l'intermédiaire d'une liaison directe via le réseau de paquets (IPCore), et
- **en ce que** l'on utilise pour la communication entre téléphone (POTS-T, ISDN-T, IP-T(MGCP), GSM-T) et contrôleur de passerelle média (MGC) le protocole MGCP.

11. Procédé selon l'une des revendications précédentes,
**caractérisé en ce que**
- l'on utilise comme téléphone (POTS-T, ISDN-T, IP-T(MGCP), GSM-T) un téléphone mobile (GSM-T),
- **en ce que** le téléphone mobile (GSM-T) communique avec le contrôleur de passerelle média (MGC) par l'intermédiaire d'un centre de commutation (GSM-S) supportant la téléphonie par téléphones mobiles, et
- **en ce que** l'on utilise entre le téléphone (POTS-T, ISDN-T, IP-T(MGCP), GSM-T) et le centre de commutation (GSM-S) supportant la téléphonie par téléphones mobiles, le protocole BSSAP.

12. Contrôleur de passerelle média (MGC) comprenant des moyens pour exécuter les étapes d'un procédé selon l'une des revendications 1 à 11.
